**Europäisches Patentamt**

**European Patent Office**

**Office européen des brevets**

(11) Veröffentlichungsnummer: **0 098 669**
**A1**

(12) ## EUROPÄISCHE PATENTANMELDUNG

(21) Anmeldenummer: **83201001.1**

(22) Anmeldetag: **05.07.83**

(51) Int. Cl.³: **B 29 D 23/20**

(30) Priorität: **08.07.82 DE 3225522**

(43) Veröffentlichungstag der Anmeldung: **18.01.84** Patentblatt 84/3

(84) Benannte Vertragsstaaten: **BE DE FR GB IT LU NL**

(71) Anmelder: **CEBAL Verpackungen GmbH & Co. KG, Postfach 4247 Schweinauer Hauptstrasse 80, D-8500 Nürnberg 1 (DE)**

(72) Erfinder: **Pfaff, Reinhard, Niederseelbacher Strasse 67 A, D-6272 Niedernhausen (DE)**
Erfinder: **Kaut, Heinz, Rhönstrasse 4, D-6072 Dreieich (DE)**
Erfinder: **Sattler, Hans-Peter, Dr., Ferdinandstrasse 22, D-6380 Bad Homburg (DE)**

(74) Vertreter: **Fischer, Ernst, Dr., Reuterweg 14, D-6000 Frankfurt am Main 1 (DE)**

(54) **Verfahren zum Konifizieren von Tuben.**

(57) Es wird ein Verfahren vorgeschlagen, bei dem Tuben oder ähnlich geformte Verpackungsbehälter mit einem zylindrischen Körper aus einem extrudierten Schlauch aus thermoplastischem Kunststoff konfiziert werden können, damit man sie - wie dies für metallische Tuben bereits bekannt ist - ineinanderstecken und so platzsparend lagern und transportieren kann.

Die Tube 1 wird mittels Oberwerkzeug 3 auf einen erwärmten Dorn 2 aufgepresst und dabei konisch erweitert. Anschliessend wird sie mittels Infrarotstrahler 4 erwärmt und dann auf dem Dorn abgekühlt. Auf diese Weise lässt sich, trotz der unvermeidlichen Rückstellung, eine ausreichende Konifizierung der Tubenwandung reproduzierbar herstellen.

0098669

METALLGESELLSCHAFT AG          - 2 -          06. Juli 1982
Reuterweg 14                                  MLK/USCHW/(0789)

6000 Frankfurt/Main 1


Prov. Nr. 8699 M


Verfahren zum Konifizieren von Tuben


Die Erfindung bezieht sich auf ein Verfahren zum Konifizieren von Tuben oder ähnlich geformten Verpackungsbehältern, bei denen der zylindrische Körper aus einem extrudierten Schlauch aus thermoplastischem Kunststoff besteht.

Es ist bekannt, metallische Tuben oder dergleichen zu
konifizieren, um die leeren Tuben ineinanderzustecken und
auf diese Weise platzsparend lagern und transportieren zu
können. Das gleiche wird auch für Kunststofftuben angestrebt. Bisher ist es jedoch nicht gelungen, die aus einem
extrudierten Schlauch bestehenden zylindrischen Tubenkörper in wirtschaftlicher Weise zu konifizieren.

Schwierigkeiten macht vor allem das unterschiedliche Rückstellverhalten nach dem Konifizieren. Wenn die ineinandergesteckten Tuben sich deshalb nicht mehr ohne weiteres
vereinzeln lassen, wird der Abfüller konifizierte Tuben
ablehnen und die Vorteile durch Platzersparnis beim Transport und bei der Lagerung können nicht genutzt werden.

Eine weitere Schwierigkeit besteht darin, daß die Fertigung von Kunststofftuben inzwischen stark rationalisiert

0098669

und automatisiert ist und daß von daher an den Konifiziervorgang bestimmte Forderungen hinsichtlich Geschwindigkeit
und Integrationsmöglichkeit in den üblichen Produktionsablauf gestellt werden müssen.

Insbesondere muß das Konifizieren am fertig oberflächenbehandelten Tubenkörper durchführbar sein, weil eine Umstellung sämtlicher auf eine zylindrische Tubenwandung abgestellter Arbeitschritte zu aufwendig und im Einzelfall
praktisch nicht zu realisieren ist.

Es besteht somit die Aufgabe, Tuben der eingangs genannten
Art in der Weise zu konifizieren, daß sie sich nach dem
Ineinanderstecken wieder einwandfrei vereinzeln lassen,
daß die eingefahrenen Produktionsabläufe nicht umgestellt
werden müssen und insbesondere daß das Konifizieren an den
im übrigen fertigen Tuben durchführbar ist.

Überraschenderweise hat sich herausgestellt, daß alle diese Forderungen erfüllt werden können, wenn man von Tuben
oder ähnlich geformten Verpackungsbehälter ausgeht, bei
denen der zylindrische Körper aus einem extrudierten
Schlauch aus thermoplastischem Kunststoff besteht und wenn
man den zylindrischen Körper durch Kaltverformen konisch
aufweitet und im aufgeweiteten Zustand thermisch nachbehandelt.

Der zylindrische Körper kann mechanisch, beispielsweise
durch Auftreiben auf einen konischen Dorn oder durch einen
spreizbaren Dorn aufgeweitet werden, wobei der Dorn zweckmäßigerweise mittels eines Fluidstromes heiz- und kühlbar
ist. Das Aufweiten kann auch mittels flüssigem oder gasförmigem Druckmittel erfolgen.

Die thermische Nachbehandlung besteht vorzugweise aus einer Wärm- und einer Kühlphase. Zum Erwärmen des konisch
aufgeweiteten Körpers wird zweckmäßigerweise Wärmestrahlung, insbesondere aus einem Infrarotstrahler angewendet. Der konisch aufgeweitete Körper kann auch mittels
Heißgasstrom oder durch Eintauchen in eine Heizflüssigkeit
erwärmt werden. Zum Kühlen des konisch aufgeweiteten und
erwärmten Körpers wird vorzugsweise ein fluides Kühlmittel
benutzt. Der zylindrische Körper wird um das Maß der nach
der thermischen Nachbehandlung eintretenden Rückstellung
stärker aufgeweitet. Ein besonderer Vorteil des erfindungsgemäßen Verfahrens besteht darin, daß die zu konifizierenden Tuben oder ähnlich geformten Behälter vor dem
Konifizieren bereits bedruckt und/oder lackiert oder in
anderer Weise fertig oberflächenbehandelt sein können.

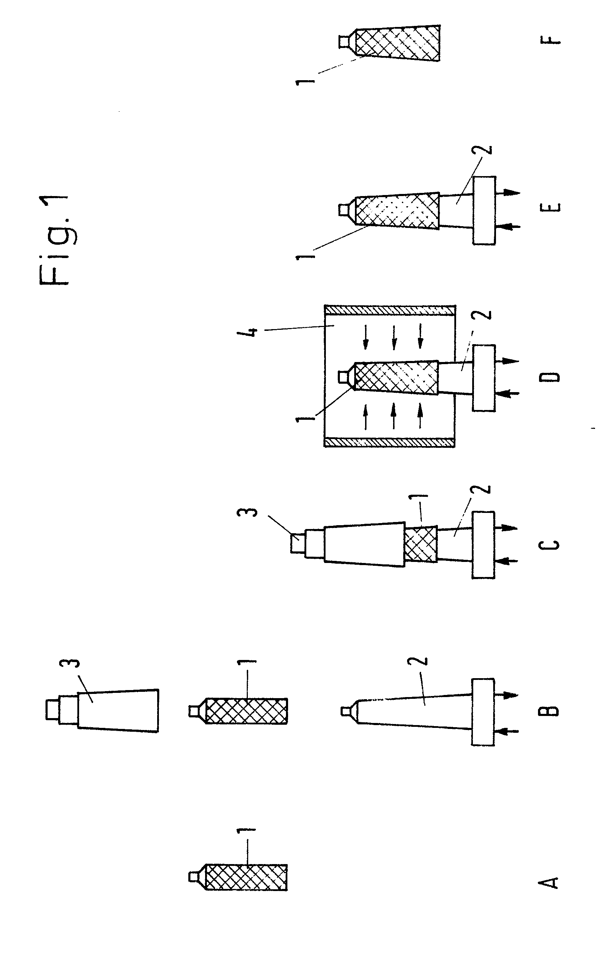

Weitere Einzelheiten des erfindungsgemäßen Verfahrens werden anhand des in Figur 1 dargestellten Ausführungsbeispiels näher erläutert. In 6 Phasen A bis F, ist das Konifizieren einer Kunststofftube 1 schematisch dargestellt,
die aus einem zylindrischen Körper aus einem extrudierten
Schlauchabschnitt aus Polyethylen und einem daran angespritzten Schulter- und Kopfteil besteht. Die Tube hat einen Außendurchmesser von 25 mm und eine Länge des zylindrischen Teils von 95 mm. Sie ist auf der Zylinderfläche
bedruckt und lackiert, d.h. - abgesehen vom Füllen -
verkaufsfertig hergestellt. (Phase A).

In Phase B ist die Vorbereitung zum Kaltumformen dargestellt. Der konische Dorn 2 hat einen Durchmesser von
24,2 mm am Kopf und von 29,5 mm am Fuß. Er ist 100 mm lang
und mit inneren Kanälen für das Durchströmen eines Wärmeträgermittels ausgestattet. Die Zu- und Abflußleitungen
sind durch Pfeile am Sockel des Dorns 2 angedeutet. Im
vorliegenden Fall waren ein flüssiges Wärmeträgermittel
von 90$^{o}$C und eine "Vorwärmung" des Dorns 2 von 5 sec.

vorgesehen. Zu erwähnen ist, daß definitionsgemäß eine
Umformung thermoplastischer Kunststoffkörper unterhalb der
Schmelztemperatur als Kaltumformung bezeichnet wird.

In Phase C ist das Ende des Umformvorgangs dargestellt.
Das Oberwerkzeug 3 ist über die Tube 1 und den Dorn 2 gestülpt; es hat die Tube 1 mit ihrer zylindrischen Wandung
auf den zylindrischen Dorn 2 aufgetrieben und dabei konisch aufgeweitet. Zum Vortrieb des Oberwerkzeugs wurde
ein (nicht dargestellter) Preßluftkolben benutzt, der mit
einem Druck von 4,5 bar beaufschlagt wurde. Für diesen
Verfahrensschritt sind etwa 1,4 sec. erforderlich, wobei
der Dorn weiterhin von dem flüssigen Wärmeträgermittel mit
$90^{o}$C durchströmt wird.

Nach dem Abheben des Oberwerkzeugs 3 wird die auf dem weiterhin erwärmten Dorn 2 aufgespannte Tube 1 etwa 15 sec.
lang von außen mittels einem auf etwa $550^{o}$C gehaltenen
Infrarotstrahler 4 erhitzt (Phase D). Danach wird die
Tube 1 auf dem Dorn 2 gekühlt, wozu etwa 20 sec. lang ein
flüssiges Wärmeträgermittel von $20^{o}$C durch den Dorn 2
gepumpt wird (Phase E). Nach dem Abheben vom Dorn 2 erfolgt eine teilweise Rückstellung der konisch aufgeweiteten Tubenwandung, wobei sich schließlich folgende Abmessungen reproduzierbar einstellen (Phase F):
Außendurchmesser oben 25 mm
Außendurchmesser unten 27,5 mm.

Mit diesen Abmessungen lassen sich Kunststofftuben platzsparend ineinanderstecken und zum Füllen ohne weiteres
wieder vereinzeln. Die vorher auf den zylindrischen Tubenkörper aufgebrachte Bedruckung und Lackierung, nimmt beim
Aufweiten keinen Schaden, so daß es nach wie vor möglich
ist, diese Fertigungsschritte an der zylindrischen Tubenwandung vorzunehmen.

0098669

PATENTANSPRÜCHE

1. Verfahren zum Konifizieren von Tuben oder ähnlich geformten Verpackungsbehältern, bei denen der zylindrische Körper aus einem extrudierten Schlauch aus
   thermoplastischem Kunststoff besteht, dadurch gekennzeichnet, daß der zylindrische Körper durch Kaltverformung konisch aufgeweitet und im aufgeweiteten Zustand thermisch nachbehandelt wird.

2. Verfahren nach Anspruch 1, dadurch gekennzeichnet, daß
   der zylindrische Körper mechanisch aufgeweitet wird.

3. Verfahren nach Anspruch 2, dadurch gekennzeichnet, daß
   der zylindrische Körper durch Auftreiben auf einen konischen Dorn aufgeweitet wird.

4. Verfahren nach Anspruch 2, dadurch gekennzeichnet, daß
   der zylindrische Körper durch einen spreizbaren Dorn
   aufgeweitet wird.

5. Verfahren nach Anspruch 3 oder 4, dadurch gekennzeichnet, daß ein mittels Fluidstrom heiz- und kühlbarer Dorn verwendet wird.

6. Verfahren nach Anspruch 1, dadurch gekennzeichnet, daß
   der zylindrische Körper mittels flüssigem oder gasförmigem Druckmittel aufgeweitet wird.

7. Verfahren nach einem der Ansprüche 1 bis 6, dadurch
   gekennzeichnet, daß die thermische Nachbehandlung aus
   einer Wärm- und Kühlphase besteht.

8. Verfahren nach Anspruch 7, <u>dadurch gekennzeichnet</u>, daß der konisch aufgeweitete Körper durch Wärmestrahlung erwärmt wird.

9. Verfahren nach Anspruch 8, <u>dadurch gekennzeichnet</u>, daß zur Erwärmung des konischen aufgeweiteten Körpers ein Infrarotstrahler verwendet wird.

10. Verfahren nach Anspruch 7, <u>dadurch gekennzeichnet</u>, daß der konisch aufgeweitete Körper mittels Heißgasstrom erwärmt wird.

11. Verfahren nach Anspruch 7, <u>dadurch gekennzeichnet</u>, daß der konisch aufgeweitete Körper durch Eintauchen in eine Heizflüssigkeit erwärmt wird.

12. Verfahren nach einem der Ansprüche 1 bis 11, <u>dadurch gekennzeichnet</u>, daß der konisch aufgeweitete und erwärmte Körper mittels fluidem Kühlmittel gekühlt wird.

13. Verfahren nach einem der Ansprüche 1 bis 12, <u>dadurch gekennzeichnet</u>, daß der zylindrische Körper um das Maß der nach der thermischen Nachbehandlung eintretenden Rückstellung stärker aufgeweitet wird.

14. Verfahren nach einem der Ansprüche 1 bis 13, <u>dadurch gekennzeichnet</u>, daß die zu konifizierenden Tuben oder ähnlich geformten Behälter vor dem Konifizieren bereits bedruckt und/oder lackiert oder in anderer Weise fertig oberflächenbehandelt sind.

Fig.1

A    B    C    D    E    F

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | **EINSCHLÄGIGE DOKUMENTE** | | EP 83201001.1 |
| A | <u>AT - B - 357 755</u> (MEPAG METALL UND PLASTIK) <br> * Gesamt * <br> -- | 1,2,4, 6,8-10 | B 29 D 23/20 |
| A | <u>DE - B - 1 479 432</u> (LICENTIA PATENTVERWALTUNGS-GMBH) <br> * Spalte 1, Zeilen 1-43 * <br> -- | | |
| A | <u>DE - B - 1 704 059</u> (BOHLMANN) <br> * Gesamt * <br> -- | | |
| P,A | <u>EP - A1 - 0 072 891</u> (HERLAN & CO) <br> * Gesamt * <br> -- | | |
| A | <u>DE - A1 - 2 857 004</u> (MEPAG METALL UND PLASTIK) <br> * Gesamt * <br> ---- | | |

RECHERCHIERTE SACHGEBIETE (Int. Cl. 3)

B 29 D

B 29 C

D 21 D

Der vorliegende Recherchenbericht wurde für alle Patentansprüche erstellt.

| Recherchenort | Abschlußdatum der Recherche | Prüfer |
|---|---|---|
| WIEN | 13-10-1983 | BAUMGARTNER |